# EUROPEAN PATENT APPLICATION

(11) **EP 4 821 579 A1**
(43) Date of publication of application: **14.10.2026**
(21) Application number: 25305516.4
(22) Date of filing: 09.04.2025
(51) Int. Cl.: B01D 35/18, B01D 36/00, B01D 37/04, B01D 35/12

(54) **SYSTEM AND METHOD FOR DEPOLLUTING A FLUID**

(71) Applicant: Alfa Laval Moatti, 78990 Elancourt (FR)
(72) Inventor: Nicolle, Adrien, 78990 Elancourt (FR)
(74) Representative: Alfa Laval Attorneys

(57) **Abstract**

A system for depolluting a fluid, the system comprising a filtering unit (10) comprising a filtering medium (21, 31) through which the fluid is to flow to be filtered and a backwash mechanism (24, 34) configured to enable a backwash fluid to flow backwards through the filtering medium (21, 31), the system further comprising a drain tank (40) arranged downstream of the backwash mechanism (24, 34) and having an inlet (42) to receive the backwash fluid after passing backwards through the filtering medium (21, 31), the drain tank (40) having an evaporation outlet (48) for recovering a fraction of the backwash fluid that evaporates in the drain tank (40).

## Description

### TECHNICAL FIELD

The present disclosure relates to the field of fluid cleaning and purification, and more particularly to a system and method for depolluting a fluid. Such a system and method may find applications in purifying fuel before burning in an engine, e.g. in vehicles such as ships.

### TECHNOLOGICAL BACKGROUND

In the field of transportation, e.g. marine transportation, many efforts are made in order to decrease the environmental impact of vehicles. For instance, alternative fuels are studied. Some replacement fuels, such as ammonia, are promising from an environmental and efficiency perspective but have hazardous properties.

Besides, to protect the engine, it is generally necessary to filter the fuel before burning. Conventionally, the fuel is filtered by inserts or cartridges that are regularly changed manually. However, with hazardous fuels, it is desired to avoid manual operations.

Thus, there is a need for a system and method for depolluting a fluid, that minimize the amount of polluted fluid to handle.

### SUMMARY

This object is achieved by a system for depolluting a fluid, the system comprising a filtering unit comprising a filtering medium through which the fluid is to flow to be filtered and a backwash mechanism configured to enable a backwash fluid to flow backwards through the filtering medium, the system further comprising a drain tank arranged downstream of the backwash mechanism and having an inlet to receive the backwash fluid after passing backwards through the filtering medium, the drain tank having an evaporation outlet for recovering a fraction of the backwash fluid that evaporates in the drain tank.

Hereinafter, for the sake of conciseness, this system is referred to as the depolluting system.

The filtering medium is a medium able to filter the fluid by retaining particles greater than a desired size while the fluid flows therethrough. However, due to a possible build-up of pollutants in the filtering medium, it is advantageous to regularly backwash the filtering medium, namely to enable a backwash fluid to flow backwards through the filtering medium. In this way, the accumulated pollutants can be removed and the filtering capacity of the filtering medium can be partially or totally restored.

The backwash mechanism may operate on part of or all the filtering unit. When the backwash mechanism operates only on a part of the filtering unit at a given time, the backwash mechanism may be moved from part to part, sequentially or continuously, in order to eventually clean the whole filtering unit. The filtering unit may carry on the filtering process on one part thereof while another part thereof is being backwashed. When the backwash mechanism operates on the whole filtering unit at once, the backwash operation may be performed punctually, when desired. In this case, the filtering process may be stopped while the whole filtering unit is being backwashed.

The drain tank is arranged downstream of the backwash mechanism, i.e. is arranged to receive the backwash fluid that has flown backwards through the filtering medium. Thus, the drain tank is configured to receive, through its inlet, the backwash fluid with the accumulated pollutants removed from the filtering medium. In the present disclosure, upstream and downstream are used to indicate relative positions such that in normal operation, a certain fluid flows from upstream to downstream. In the case mentioned above, in normal operation, the backwash fluid flows first through the backwash mechanism and then to the drain tank.

Besides that inlet, the drain tank has an evaporation outlet for recovering a fraction of the backwash fluid that evaporates in the drain tank, thus leaving the solid pollutants in the drain tank. Thus, the drain tank enables separation of the evaporated backwash fluid from the pollutants. Once evaporated and recovered, the backwash fluid may be reused, while the pollutants can accumulate in the drain tank.

The proposed depolluting system judiciously combines the filtering unit with a backwash mechanism to concentrate the retained pollution in a relatively small amount of backwash fluid, and the drain tank which enables that small amount to be recovered through evaporation, while leaving the pollutants in the drain tank. Since the amount of backwash fluid is generally much less than the amount of fluid to filter, the drain tank contains a relatively small amount of fluid, for which evaporation can take place in a reasonable amount of time. Overall, after evaporation, only a portion of the backwash fluid that eventually remains in the drain tank is to be handled manually. The depolluting system thus provides an efficient solution to automatically and efficiently process the fluid to filter and to minimize the amount of polluted fluid to handle.

Optionally, the drain tank comprises a drain outlet for draining the drain tank. The drain outlet may be provided with a suitable valve and may be used to empty the drain tank, e.g. to recover the backwash fluid that has not evaporated, along with the accumulated pollutants therein.

Optionally, in an operation position, the drain outlet is located below the inlet. This facilitates draining the drain tank by gravity without interfering with the inlet.

Optionally, in an operation position, the evaporation outlet is located above the inlet. Thus, even when the level of fluid in the drain tank reaches the inlet, fluid can still evaporate through the evaporation outlet. Thus, the drain tank capacity can be effectively used.

Optionally, the depolluting system comprises a drain valve between the filtering medium and the drain tank. The drain valve may be provided on a duct configured to convey the backwash fluid from the filtering medium to the drain tank. The drain valve may be configured to allow or interrupt the flow of backwash fluid from the backwash mechanism, preferably downstream of the backwash filter, to the drain tank. The drain valve may be useful to isolate the drain tank from the filtering unit (and specifically the backwash mechanism), e.g. in order to introduce or maintain a pressure difference between the filtering unit and the drain tank. For instance, while the fluid to depollute may be pressurized when flowing through the filtering unit, the drain tank may be set at a lower pressure to promote evaporation of the backwash fluid. Thus, the drain valve improves the flexibility and the effectiveness of the depolluting system.

Optionally, the depolluting system further comprises a control unit configured to actuate the drain valve based on at least one of a pressure drop across the filtering unit, elapsed time, and an operator's instruction. Based on a signal received from the control unit, the drain valve may be opened, closed, or possibly maintained in any intermediate position. The pressure drop across the filtering unit, i.e. the difference between the pressures upstream and downstream of the filtering unit, may indicate how much the filtering medium is clogged, and therefore the need to drain more or less backwash fluid to the drain tank. Elapsed time may be useful if the drain valve should be actuated at least after a predetermined period has elapsed, e.g. as a regular maintenance operation. Operator's instructions enable to actuate the drain valve on demand, based on various operation considerations. Altogether, the control unit offers a suitable way to actuate the drain valve.

Optionally, the depolluting system further comprises an evaporation valve on the evaporation outlet. The evaporation valve may be configured to allow or interrupt the evaporation of backwash fluid through the evaporation outlet. The evaporation valve may be useful to isolate the drain tank from components downstream thereof, and/or to introduce or maintain a certain level of pressure in the drain tank. For instance, since the fluid to depollute may be pressurized when flowing through the filtering unit, the drain tank may be kept at a desired level of pressure in order to avoid excessive suction to the filtering unit from the drain tank side. Thus, the evaporation valve improves the flexibility and the effectiveness of the depolluting system.

Optionally, the backflush fluid is fluid that has been filtered through the filtering medium. A duct or chamber may redirect a portion of the filtered fluid, downstream of the filtering medium, to the backwash mechanism. Owing to those features, the backwash fluid has the same chemical nature as the fluid to depollute. This simplifies both the structure and operation of the filtering unit and the recovery of the evaporated backwash fluid.

Optionally, the filtering unit comprises a main filter device and the backwash mechanism comprises a main backwashing distributor of the main filter device. The main backwashing distributor may be a continuous distributor (e.g. a rotary distributor) or an intermittent distributor. The main backwashing distributor is configured to distribute backwash fluid to the main filter device. The main backwashing distributor selectively isolates a portion (e.g. a sector) of the filtering medium of the main filter device and enables the backwash fluid to flow backwards through that portion.

Optionally, the filtering unit comprises an auxiliary filter device configured to filter the backwash fluid from the main filter device. The auxiliary filter device may have a coarser, same-sized or finer filtering medium than the main filter device. By filtering the backwash fluid from the main filter device in an auxiliary filter device, more fluid (i.e. the fluid filtered in the auxiliary filter device in addition to the fluid filtered in the main filter device) can be recovered, which further minimizes the amount of fluid that is sent to the drain tank. The auxiliary filter device may have any or all of the properties and features of the main filter device.

Optionally, the backwash mechanism comprises an auxiliary backwashing distributor of the auxiliary filter device, the auxiliary backwashing distributor being fluidly connected to an outlet of the main filter device to receive fluid filtered by the main filter device to backwash the auxiliary filter device, and wherein a backwash outlet of the auxiliary filter device is fluidly connected to the drain tank. The auxiliary backwashing distributor may be a continuous distributor (e.g. a rotary distributor) or an intermittent distributor. The auxiliary backwashing distributor is configured to distribute backwash fluid to the auxiliary filter device. The backwash fluid for the auxiliary filter device is fluid that has been filtered by the main filter device. The auxiliary backwashing distributor selectively isolates a portion (e.g. a sector) of the filtering medium of the auxiliary filter device and enables the backwash fluid to flow across that portion. A backwash outlet of the auxiliary filter device receives the fluid that has flown backwards through the filtering medium of the auxiliary filter device, and is fluidly connected to the drain tank to convey that fluid to the drain tank. Thus, the auxiliary filter device can be regularly cleaned and unclogged while decreasing the amount of fluid to send to the drain tank.

Optionally, the depolluting system further comprises a condenser downstream of the evaporation outlet. The condenser may condense the evaporated fluid back into liquid form, to facilitate its recirculation in the depolluting system.

Optionally, an outlet of the condenser is fluidly connected to an inlet of the filtering unit. Thus, fluid that has evaporated is sent back to the filtering unit and can be used like input fluid. Thanks to these provisions, the fluid recovery is enhanced, and correspondingly, the amount of fluid to handle manually (e.g. drain from the drain tank) is reduced.

Optionally, the depolluting system further comprises means for promoting evaporation within the drain tank, such as a heater or a fan. Means that promote evaporation are means that result in better evaporation in the drain tank as compared to if those means were absent. Thanks to those means, the fluid recovery is enhanced, and correspondingly, the amount of fluid to handle is reduced.

The present disclosure is further directed to a method for depolluting a fluid, comprising circulating the fluid through a filtering medium of a filtering unit, backwashing the filtering unit by enabling a backwash fluid to flow backwards through the filtering medium, circulating the backwash fluid that has passed the filtering medium to a drain tank, evaporating a fraction of the backwash fluid in the drain tank, and recovering the evaporated fraction through an evaporation outlet of the drain tank.

Hereinafter, for the sake of conciseness, this method is referred to as the depolluting method. The depolluting method may be carried out with the above-described depolluting system. Independently of the depolluting system, the depolluting method may have any feature corresponding to those described in relation to the depolluting system. The proposed depolluting method provides an efficient solution to minimize the amount of polluted fluid to handle eventually.

Optionally, during the recovering, a drain valve between the filtering medium and the drain tank is closed and an evaporation valve provided on the evaporation outlet is open. In doing so, the backwash fluid that is present inside the drain tank can evaporate through the evaporation outlet. Furthermore, the pressure within the drain tank can be lowered, which promotes evaporation of the fluid.

Optionally, during the circulating the backwash fluid, the drain valve is open and the evaporation valve is closed. In doing so, the polluted backwash fluid can be sent to the drain tank and the pressure within the drain tank can be maintained, which avoids an excessive pressure drop across the backwash mechanism.

Optionally, the fluid comprises ammonia or methanol. Ammonia and methanol can be used as fuels, e.g. for ship engines. Ammonia and methanol being particularly volatile makes the proposed depolluting method even more efficient.

Optionally, the fluid is pressurized in the filtering unit, i.e. at a pressure higher than the atmospheric pressure. For instance, in the filtering unit, the fluid may be at a pressure not less than 10 bars, preferably not less than 50 bars.

### BRIEF DESCRIPTION OF THE DRAWINGS

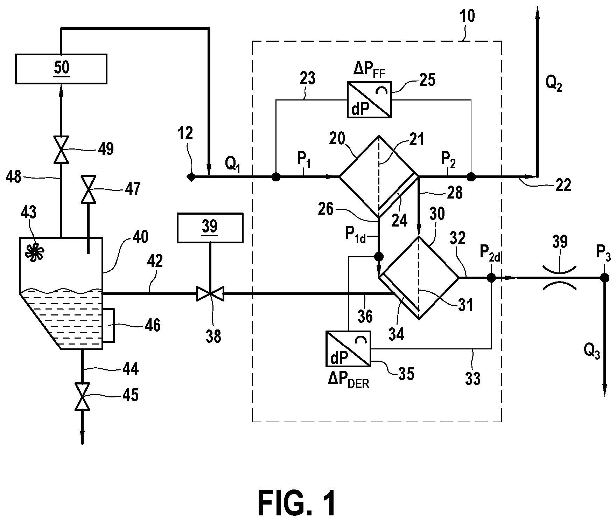

The invention and advantages thereof will be better understood upon reading the detailed description which follows, of embodiments given as non-limiting examples. This description refers to the appended drawings, wherein Fig. 1 is a diagram illustrating a depolluting system according to an embodiment.

### DETAILED DESCRIPTION OF EMBODIMENTS

Figure 1 illustrates a system for depolluting a fluid according to an embodiment. As mentioned above, the fluid may be a fuel such as ammonia or methanol, however other fluids may be considered. For reasons that will be detailed below, the fluid is preferably a volatile (or evaporation-friendly) fluid.

The depolluting system comprises a filtering unit 10 to which the fluid to be treated can be supplied through a main inlet 12, at a flow rate Q₁ and a pressure P₁. In an example, the fluid may be pressurized in the filtering unit 10, e.g. at a pressure not less than 10 bars, preferably not less than 50 bars. Pressurization may be obtained by means known per se in the art and not detailed herein. As the case may be, pressurization ensures that the fluid remains liquid in the filtering unit 10, which facilitates its processing.

The filtering unit 10 has a main outlet 22 that receives the fluid that has been filtered through a filtering medium of the filtering unit 10. The filtered fluid may be used for any desired purpose, e.g. as fuel to a vessel engine. The filtered fluid flowing through the main outlet 22 has a flow rate Q₂ and a pressure P₂. The flow rate Q₂ is generally less than or equal to the flow rate Q₁. Because of the pressure drop across the filtering unit 10, the pressure P₂ downstream of the filtering unit 10 is generally less than the pressure P₁ upstream of the filtering unit 10.

Specifically, the filtering unit 10 may comprise a main filter device 20 having a filtering medium 21. The main filter device 20 may be any type of filter. In this embodiment, the main filter device 20 receives the flow of fluid from the main inlet 12 and outputs filtered fluid to the main outlet 22. The filtering medium 21, e.g. a screen or mesh, is sized based on the impurities that are to be removed from the fluid.

A main pressure drop sensor 25 may be provided to detect the pressure drop ΔP_{FF} across the main filter device 20. The main pressure drop sensor 25 may be located on a main bypass 23 connecting the upstream side and downstream side of the main filter device 20.

In order to avoid clogging the filtering medium by build-up of retained pollutants, the filtering unit 10 comprises a backwash mechanism configured to enable a backwash fluid to flow backwards through the filtering medium. The backwash mechanism may be a common mechanism for the whole filtering unit 10 or may include a plurality of backwash assemblies that, together, carry out the backwashing.

For instance, the backwashing mechanism may comprise a main backwashing distributor 24 of the main filter device 20. The main backwashing distributor 24 may receive a backwash fluid and circulate the backwash fluid backwards through a portion of the filtering medium 21 (possibly all the filtering medium) that has been isolated from the main inlet 12. After passing through the filtering medium 21, the backwash fluid is sent to a main backwash outlet 26.

The backwash fluid may be a portion of the fluid that has been filtered by the main filter device 20 or that has been filtered through the filtering medium 21. In other words, the backwash fluid may be a portion of the fluid that would otherwise flow to the main outlet 22.

The main backwashing distributor 24 may automatically rotate or otherwise move in order to sequentially or continuously isolate successive portions of the filtering medium and enable backwash fluid to flow backwards therethrough. Filter devices with automatic backwashing are known per se in the art, e.g. from international publication WO 2012/028824 A1 to the Applicant.

In order to recover at least part of the backwash fluid, the filtering unit 10 may further comprise an auxiliary filter device 30 configured to filter the backwash fluid from the main filter device 20. Specifically, the main backwash outlet 26 is fluidly connected to an inlet of the auxiliary filter device 30. The auxiliary filter device 30 may comprise a filtering medium 31 through which the backwash fluid from the main filter device 20 is filtered. The auxiliary filter device 30 may have any or all of the properties mentioned in relation to the main filter device 20.

The auxiliary filter device 30 has an auxiliary outlet 32 that receives the fluid filtered by the filtering medium 31. The pressure drop ΔP_{DER} between the main backwash outlet 26, at a pressure P_{1d}, and the auxiliary outlet 32, at a pressure P_{2d}, may be detected by an auxiliary pressure drop sensor 35. The auxiliary pressure drop sensor 35 may be located on an auxiliary bypass 33 connecting the upstream side and downstream side of the auxiliary filter device 30.

The fluid filtered by the auxiliary filter device 30 may be used for any desired purpose, e.g. joined or not to the fluid filtered by the main filter device 20 or to the main inlet 12. In the illustrated example, it is circulated through a constriction 39 which results in a flow rate Q₃ at a pressure P₃.

The auxiliary filter device 30 may itself be cleaned. To this end, the backwash mechanism may comprise an auxiliary backwashing distributor 34 of the auxiliary filter device 30. The auxiliary backwashing distributor 34 may have any or all of the properties mentioned in relation to the main backwashing distributor 24.

The auxiliary backwashing distributor 34 may receive, as backwash fluid, fluid filtered by the auxiliary filter device 30 or instead, as illustrated, fluid filtered by the main filter device 20. To this end, the auxiliary backwashing distributor 34 may be fluidly connected to an outlet of the main filter device 20, e.g. the main outlet 22, to receive fluid filtered by the main filter device 20 to backwash the auxiliary filter device 30. Specifically, a derivation 28 may connect the main outlet 22 (or any portion between the main outlet 22 and the downstream side of the filtering medium 21) to an inlet of the auxiliary backwashing distributor 34. After flowing backwards through the filtering medium 31, the backwash fluid is sent to an auxiliary backwash outlet 36, i.e. a backwash outlet of the auxiliary filter device 30.

In this example, the auxiliary backwash outlet 36 forms an overall outlet of the backwash mechanism. However, while the filtering unit 10 has been presented with two successive filter devices 20, 30, the number of filter devices can be adapted by the skilled person based on their knowledge and requirements. For instance, the auxiliary filter device 30 may be omitted and the main backwash outlet 26 could form an overall outlet of the backwash mechanism.

As mentioned previously, the system further comprises a drain tank 40 arranged downstream of the backwash mechanism. As shown in Fig. 1, the drain tank 40 may have an inlet 42 fluidly connected to the auxiliary backwash outlet 36 (or more generally to an outlet of the backwash mechanism) to receive the backwash fluid that has passed backwards through the filtering medium 31.

A drain valve 38 may be provided between the filtering medium 31 and the drain tank 40, the drain valve 38 being configured to enable or restrict the flow from the auxiliary backwash outlet 36 to the inlet 42 of the drain tank 40. The drain valve 38 may isolate the drain tank 40 from the filtering unit 10, thus enabling different pressure levels depending on operation requirements.

The drain valve 38 may be controlled by a control unit 39, which may be e.g. computer-implemented (e.g. an Electronic Control Unit). The control unit 39 may actuate the drain valve 38 based on a pressure drop across the filtering unit 10. To this end, the control unit 39 may receive signals from the main pressure drop sensor 25 and/or the auxiliary pressure drop sensor 35 and, for instance, open the drain valve to promote the flow of backwash fluid when it is determined that a detected pressure drop exceeds a threshold.

Alternatively or in addition, the actuation of the drain valve 38 by the control unit 39 may be time-based, e.g. the drain valve may be opened at least every predetermined period, namely when a certain time has elapsed.

Alternatively or in addition, the control unit 39 may actuate the drain valve 38 based on an operator's instructions, thus enabling manual control of the drain valve. The operator's instructions may be input to the control unit 39 directly or indirectly and by any suitable means, such as a user interface on a local, distant or portable terminal.

The drain tank 40 is configured to receive backwash fluid that has cleaned the filtering unit 10 and therefore that is polluted. For this reason, the drain tank 40 may need to be drained itself. Thus, the drain tank 40 may comprise a drain outlet 44 for draining the drain tank 40. As shown in Fig. 1, the drain outlet 44 is preferably located below (i.e. lower than) the inlet 42 in an operation position, to facilitate draining. As also illustrated in Fig. 1, the shape of the drain tank, e.g. being narrower at the bottom thereof, may also be determined to facilitate draining. Alternatively or in addition, a vibrator may be provided to vibrate the drain tank 40 and therefore facilitate draining thereof.

The drain outlet 44 may be provided with a suitable drain outlet valve 45 to control draining of the drain tank 40.

Besides, the drain tank 40 may be provided with a safety valve 47 in order to avoid overpressure in the drain tank. While not shown in Fig. 1, the safety valve may lead the fluid in excess to other systems that contain the fluid, especially if the fluid is a hazardous one.

The drain tank 40 has an evaporation outlet 48 for recovering a fraction of the backwash fluid that evaporates in the drain tank 40. As shown in Fig. 1, the evaporation outlet 48 is preferably located above (i.e. higher than) the inlet 42 in an operation position, to facilitate evaporation.

As the backwash fluid is preferably a volatile fluid, the evaporation outlet 48 enables to extract the gaseous phase of the backwash fluid that has evaporated in the drain tank 40, which then favors further evaporation of the backwash fluid and, eventually, recovery of the evaporated backwash fluid while the solid pollutants, that were taken off the filtering media 21, 31 by the backwash fluid, remain in the drain tank 40.

An evaporation valve 49 may be provided on the evaporation outlet 48 to control the evaporation rate and the pressure inside the drain tank 40.

In order to further promote evaporation within the drain tank 40, dedicated means may be provided, such as a fan 43 and/or a heater 46. The fan 43 may be located inside the drain tank 40 and configured to circulate gas within the drain tank 40 to enhance homogenization of the gaseous phase. The heater 46 may be configured to increase the temperature of the fluid in the drain tank 40 to lower the fraction of vapor that recondenses inside the drain tank.

Downstream of the evaporation outlet 48, the evaporated backwash liquid may be recovered by any suitable technique. The illustrated embodiment gives the example of a condenser 50 located downstream of the evaporation outlet 48, and as the case may be, downstream of the evaporation valve 49. The condenser 50 receives the backwash fluid in gaseous phase and is configured to lower its temperature and/or increase its pressure to transform it back to the liquid phase.

Then, that liquid fluid can be reused or disposed of as desired. In an example, an outlet of the condenser 50 is fluidly connected to an inlet of the filtering unit 10, e.g. the main inlet 12, so that the recovered fluid, although mostly purified due to its evaporation in the drain tank 40, can be recirculated through the depolluting system.

Thanks to these provisions, the amount of backwash fluid to manually handle in the drain tank 40 is limited to the fluid evacuated through the drain outlet 44, and thus is greatly reduced as compared to prior systems. Hence, the proposed depolluting system is advantageous for hazardous fluids.

A method for depolluting a fluid may be carried out using the described depolluting system, or using another appropriate system. The method comprises circulating the fluid to depollute through a filtering medium 21, 31 of a filtering unit 10, backwashing the filtering unit 10 by enabling a backwash fluid to flow backwards through the filtering medium 21, 31, circulating the backwash fluid that has passed the filtering medium to a drain tank 40, evaporating a fraction of the backwash fluid in the drain tank 40, and recovering the evaporated fraction through an evaporation outlet 48 of the drain tank 40.

To make the depolluting method easier to carry out, valves may be operated as follows. During the recovering of the evaporated fluid, a drain valve (e.g. drain valve 38 in Fig. 1) between the filtering medium 31 and the drain tank 40 is closed while an evaporation valve (e.g. evaporation valve 49) provided on the evaporation outlet 48 is open. In this way, the pressure in the drain tank 40 can decrease progressively as the gaseous fluid is extracted through the evaporation outlet, without interfering with the operation of the filtering unit 10. A high level of evaporation can be reached in this way.

Conversely, during the circulating the backwash fluid in the filtering unit 10, the drain valve 38 is open while the evaporation valve 49 is closed. This enables the filtering unit 10 to work properly with a discharge of polluted backwash fluid to the drain tank 40, while maintaining, in the drain tank 40, a level of pressure that is appropriate not to disturb the proper operation of the filtering unit 10. Besides, if the auxiliary filter device 30 is constructed as a diversion chamber able to accumulate pollution particles, the drain valve 38 may be opened intermittently to evacuate the pollution particles to the drain tank 40.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A system for depolluting a fluid, the system comprising a filtering unit (10) comprising a filtering medium (21, 31) through which the fluid is to flow to be filtered and a backwash mechanism (24, 34) configured to enable a backwash fluid to flow backwards through the filtering medium (21, 31), the system further comprising a drain tank (40) arranged downstream of the backwash mechanism (24, 34) and having an inlet (42) to receive the backwash fluid after passing backwards through the filtering medium (21, 31), the drain tank (40) having an evaporation outlet (48) for recovering a fraction of the backwash fluid that evaporates in the drain tank (40).

2. The system of claim 1, wherein the drain tank (40) comprises a drain outlet (44) for draining the drain tank (40), optionally wherein in an operation position, the drain outlet (44) is located below the inlet (42).

3. The system of claim 1 or 2, wherein in an operation position, the evaporation outlet (48) is located above the inlet (42).

4. The system of any one of claims 1 to 3, comprising a drain valve (38) between the filtering medium (21, 31) and the drain tank (40).

5. The system of claim 4, further comprising a control unit (39) configured to actuate the drain valve (38) based on at least one of a pressure drop (ΔP_{FF}, ΔP_{DER}) across the filtering unit (10), elapsed time, and an operator's instruction.

6. The system of any one of claims 1 to 5, further comprising an evaporation valve (49) on the evaporation outlet (48).

7. The system of any one of claims 1 to 6, wherein the backflush fluid is fluid that has been filtered through the filtering medium (21).

8. The system of any one of claims 1 to 7, wherein the filtering unit (10) comprises a main filter device (20) and the backwash mechanism comprises a main backwashing distributor (24) of the main filter device (20).

9. The system of claim 8, wherein the filtering unit (10) comprises an auxiliary filter device (30) configured to filter the backwash fluid from the main filter device (20), optionally wherein the backwash mechanism comprises an auxiliary backwashing distributor (34) of the auxiliary filter device (30), the auxiliary backwashing distributor (34) being fluidly connected to an outlet (22) of the main filter device (20) to receive fluid filtered by the main filter device (20) to backwash the auxiliary filter device (30), and wherein a backwash outlet (36) of the auxiliary filter device (30) is fluidly connected to the drain tank (40).

10. The system of any one of claims 1 to 9, further comprising a condenser (50) downstream of the evaporation outlet (48), optionally wherein an outlet of the condenser (50) is fluidly connected to an inlet (12) of the filtering unit (10).

11. The system of any one of claims 1 to 10, further comprising means for promoting evaporation within the drain tank, such as a heater (46) or a fan (43).

12. A method for depolluting a fluid, comprising circulating the fluid through a filtering medium (21, 31) of a filtering unit (10), backwashing the filtering unit (10) by enabling a backwash fluid to flow backwards through the filtering medium (21, 31), circulating the backwash fluid that has passed the filtering medium (21, 31) to a drain tank (40), evaporating a fraction of the backwash fluid in the drain tank (40), and recovering the evaporated fraction through an evaporation outlet (48) of the drain tank (40).

13. The method of claim 12, wherein during the recovering, a drain valve (38) between the filtering medium (21, 31) and the drain tank (40) is closed and an evaporation valve (49) provided on the evaporation outlet (48) is open, and/or during the circulating the backwash fluid, the drain valve (38) is open and the evaporation valve (49) is closed.

14. The method of claim 12 or 13, wherein the fluid comprises ammonia or methanol.

15. The method of any one of claims 12 to 14, wherein the fluid is pressurized in the filtering unit (10), optionally at a pressure not less than 10 bars, preferably not less than 50 bars.
